# FASCICULE DE BREVET EUROPEEN

(11) **EP 4 186 149 B1**
(45) Date de publication et mention de la délivrance du brevet: **16.04.2025**
(21) Numéro de dépôt: 21755805.5
(22) Date de dépôt: 23.07.2021
(51) Int. Cl.: H02K 5/20, B60K 11/02, H02K 9/197, H02K 7/00, B60K 1/00

(54) **MOTEUR ÉLECTRIQUE ET SYSTÈME DE MOTORISATION POUR TRANSFERT THERMIQUE**
ELEKTROMOTOR UND ANTRIEBSSYSTEM ZUR WÄRMEÜBERTRAGUNG
ELECTRIC MOTOR AND DRIVE SYSTEM FOR HEAT TRANSFER

(30) Priorité: 24.07.2020 FR 2007808
(43) Date de publication de la demande: 31.05.2023
(73) Titulaire: NOVARES France, 78140 Vélizy-Villacoublay (FR)
(72) Inventeur: LEDIEU, Cédric, 62144 MONT SAINT ELOI (FR)
(74) Mandataire: Germain Maureau
(86) Numéro de dépôt international: PCT/FR2021/051389
(87) Numéro de publication internationale: WO 2022/018391

(56) Documents cités:
- WO-A1-2020/126619
- DE-A1- 102014 223 875
- FR-A1- 2 756 116
- US-A1- 2014 265 659
- US-A1- 2018 170 169

## Description

US 2014/265659 A1, DE 10 2014 223875 A1 et US 2018/170169 A1 concernent des moteurs électriques avec des dispositifs de refroidissement connus.

L'invention concerne un moteur électrique agencé pour permettre un échange de chaleur avec un fluide caloporteur. Selon un autre aspect, l'invention concerne un système de motorisation comprenant un circuit de circulation d'un fluide caloporteur en vue d'un transfert thermique d'un moteur électrique vers un moteur thermique ou vers des batteries.

En raison de valeurs de contrôle des émissions de particules toujours plus strictes, le contrôle des émissions des moteurs à combustion interne est d'une grande importance et l'on a de plus en plus recours à l'hybridation en couplant le moteur thermique à un moteur électrique. Or il exsite un besoin important de refroidir les moteurs électriques. En effet, de manière générale, les moteurs électriques actuels comportent un rotor solidaire d'un arbre et un stator qui entoure le rotor. Le stator est monté dans un carter qui comporte des roulements pour le montage en rotation de l'arbre. Le carter comporte généralement des paliers avant et arrière assemblés ensemble. Les paliers définissent une cavité interne dans laquelle sont logés le rotor et le stator. Généralement, chacun des paliers porte centralement un roulement à bille pour le montage en rotation de l'arbre du rotor.

Lors du fonctionnement du moteur électrique, le courant circulant à travers des enroulements de phase du stator génère une chaleur importante qui doit être évacuée. L'un des buts de l'invention consiste à résoudre au moins l'une des problématiques suscitées.

A cet effet, l'invention concerne un moteur électrique, selon la revendication 1, comprenant :
- un rotor dont l'arbre de rotation s'étend selon un axe d'extension X,
- un stator disposé autour du rotor,
- un palier avant et un palier arrière configurés pour être assemblés en formant une cavité interne dans laquelle sont logés le rotor et le stator, le palier avant comprenant une portion cylindrique s'étendant selon l'axe d'extension X, et
- un couvercle en forme de cloche recouvrant totalement le palier arrière et au moins la portion cylindrique du palier avant, le couvercle comprenant une chambre interne qui s'étend au moins en partie autour de la cavité interne, une entrée de fluide caloporteur et une sortie de fluide caloporteur reliées fluidiquement à la chambre interne de sorte à permettre une circulation d'un fluide caloporteur dans la chambre interne.

Ainsi configuré, le moteur électrique de l'invention permet un refroidissement plus efficace du moteur électrique que dans l'art antérieur.

En effet, la circulation d'un fluide caloporteur dans une chambre interne disposée au moins en partie autour du palier avant, qui est en contact direct avec les éléments générateurs de chaleur du moteur électrique permet un échange thermique, ce qui refroidit efficacement le stator.

De plus, la présente invention permet de transférer des calories à un fluide caloporteur, qui peut être utilisé à son tour pour un transfert thermique avec un élément externe au moteur électrique telle qu'un moteur thermique à froid, une capacité thermique, ou une batterie, etc...

Par l'expression le 'couvercle comprenant une chambre interne' on entend dans le présent document que la chambre interne est présente dans l'épaisseur du couvercle.

Le couvercle selon l'invention est configuré pour former avec la portion cylindrique au moins un canal interne s'étendant au moins en partie autour de la cavité interne et configuré pour la circulation d'un liquide réfrigérant. Ainsi configuré, le moteur électrique comprend une combinaison de deux éléments efficaces pour améliorer le refroidissement du palier avant et donc du moteur électrique en fonctionnement.

Selon d'autres caractéristiques, le moteur électrique de l'invention comporte une ou plusieurs des caractéristiques optionnelles suivantes considérées seules ou en combinaison :
- Le liquide réfrigérant est choisi parmi le glycol et une huile.
- Le couvercle est constitué d'un matériau plastique.
- Le couvercle est séparé de la partie du palier avant s'étendant axialement par des éléments d'étanchéité.
- Les éléments d'étanchéité sont constitués par des joints d'étanchéité annulaires logés au moins partiellement à l'intérieur de rainures annulaires formées à la périphérie de la partie du palier avant s'étendant axialement.
- Le couvercle comprend une tubulure d'entrée de fluide réfrigérant et une tubulure de sortie de liquide réfrigérant reliées fluidiquement au canal interne de sorte à permettre une circulation d'un liquide réfrigérant dans le canal interne.
- Le canal interne possède une forme sensiblement cylindrique.
- le canal interne est annulaire.
- L'axe longitudinal du canal interne s'étend coaxialement à l'axe d'extension X.
- Les paliers avant et arrière sont en métal.
- Le palier avant est en aluminium.
- Le palier arrière est en acier.
- Les moyens de fixation sont des vis.
- Le fluide caloporteur est une huile de lubrification, telle qu'une huile pour moteur thermique ou une huile pour boite de vitesse.
- La chambre interne est cylindrique.
- La chambre interne est annulaire.
- La chambre interne s'étend coaxialement à l'axe d'extension X.
- La chambre interne et le canal interne sont coaxiaux.
- La chambre interne entoure le canal interne.
- Le couvercle comprend une paroi interne annulaire et une paroi externe annulaire qui s'étend autour de la paroi interne annulaire, la chambre interne étant délimitée intérieurement et extérieurement respectivement par la paroi interne annulaire et la paroi externe annulaire.

Selon un deuxième aspect, l'invention propose un système de motorisation comprenant un circuit de circulation pour fluide caloporteur comportant successivement :
- un moteur thermique,
- une première pompe, et
- un moteur électrique tel que précédemment décrit,
reliés fluidiquement en série, la première pompe étant configurée pour entrainer la circulation du fluide caloporteur dans le circuit de circulation depuis la chambre interne du moteur électrique vers le moteur thermique de manière à effectuer un transfert thermique depuis le moteur électrique vers le moteur thermique afin de transférer des calories du moteur électrique vers le moteur thermique grâce au fluide caloporteur.

Dans ce système de motorisation, lors du fonctionnement du moteur électrique, le fluide caloporteur circulant dans la chambre interne permet de refroidir le moteur électrique par échange thermique. La température du fluide caloporteur augmente et permet de transférer la chaleur emmagasinée pour utiliser ce fluide caloporteur plus chaud pour le fonctionnement du moteur thermique, notamment avant son démarrage ou durant sa phase de démarrage à froid. Ceci permet de limiter la durée de la phase de démarrage du moteur pendant laquelle la température de l'huile de lubrification du moteur est inférieure à la température optimale de fonctionnement. Ceci est particulièrement bénéfique pour réduire les émissions de particules polluantes qui sont accrues dans la phase de démarrage du moteur du fait de son fonctionnement à une température inférieure à celle lui permettant un fonctionnement optimal. Durant cette phase, l'huile de lubrification qui se trouve à cette même température l'empêche d'avoir la fluidité optimale pour la lubrification des pièces mobiles du moteur. Ainsi l'invention assure une meilleure fluidité de l'huile de lubrification, ce qui garantit un meilleur rendement du moteur et donc permet de réduire les émissions de CO₂. Avantageusement, le système de motorisation comprend une sonde de température configurée pour mesurer la température du fluide caloporteur à l'entrée du moteur thermique, et la première pompe comprend un contrôleur configuré pour communiquer avec la sonde de température, et piloter:
- le démarrage de la première pompe de sorte à entrainer la circulation du fluide caloporteur dans la chambre interne lorsque la température du fluide caloporteur mesurée par la sonde de température est inférieure à une valeur de température seuil prédéterminée de sorte à réchauffer le moteur thermique, et
- l'arrêt de la première pompe de sorte à arrêter la circulation du fluide caloporteur dans la chambre interne lorsque la température du fluide caloporteur mesurée par la sonde de température est supérieure à une valeur de température seuil prédéterminée.

Il est entendu que l'arrêt de la première pompe entraine l'arrêt de la circulation du fluide caloporteur dans le moteur thermique.

La température seuil prédéterminée est fixée par la température maximale que peut atteindre le liquide de refroidissement lorsque le moteur électrique fonctionne. Au-delà de cette température maximale, le fluide caloporteur réchaufferait le moteur électrique, ce qui serait contraire au but visé.

La température seuil prédéterminée est fixée entre 70 et 90 degrés lorsque le liquide réfrigérant est du glycol.

Ainsi configuré, le système de motorisation permet l'application des normes prescrites à ce jour, qui stipulent que l'huile de lubrification du moteur thermique doit être placée au-dessus d'une température déterminée, au-delà de la température ambiante avant d'être utilisée afin de diminuer la quantité de CO₂ produite. Ainsi, le moteur électrique en fonctionnement réchauffe le fluide caloporteur circulant dans la chambre interne et ce fluide caloporteur réchauffé circule ensuite dans le moteur thermique. Une fois la température déterminée atteinte, le moteur thermique peut être démarré et la connexion avec le moteur électrique peut être déconnectée, le moteur électrique continuant à fonctionner en mode boost, alternateur, freinage récupératif ou encore en mode 4x4.

Ce réchauffement du fluide caloporteur avant le démarrage du moteur thermique permet également d'atteindre immédiatement la phase de fonctionnement optimal du moteur thermique.

De préférence, le système de motorisation comprend un circuit réfrigérant pour la circulation d'un liquide réfrigérant comportant successivement :
- un moteur électrique tel que précédemment décrit
- une deuxième pompe, et
- un échangeur thermique configuré pour refroidir un fluide réfrigérant, reliés fluidiquement en série, la deuxième pompe étant configurée pour entrainer la circulation du liquide réfrigérant dans le circuit réfrigérant depuis l'échangeur thermique vers le canal interne en vue de refroidir le moteur électrique.

Grâce à cet agencement, la température du liquide réfrigérant est maintenue en dessous d'une température seuil permettant le refroidissement du moteur électrique. Avantageusement, le circuit réfrigérant et le circuit de circulation pour fluide caloporteur sont configurés afin que le sens de circulation du liquide réfrigérant soit opposé au sens de circulation du fluide caloporteur.

Selon une disposition particulière, l'entrée de fluide caloporteur est disposée face à la tubulure de sortie du fluide réfrigérant et la sortie de fluide caloporteur est disposée face à la tubulure d'entrée du fluide réfrigérant. Cette configuration permet d'optimiser l'échange de chaleur entre le moteur électrique et le fluide caloporteur.

Selon d'autres caractéristiques, le moteur électrique de l'invention comporte une ou plusieurs des caractéristiques optionnelles suivantes considérées seules ou en combinaison :
- La première pompe est une pompe électrique
- La deuxième pompe est une pompe électrique.

L'invention sera davantage comprise à la lecture de la description non limitative qui va suivre, faite en référence aux figures ci-annexées.
[Fig. 1] est une vue en section longitudinale d'un moteur électrique selon un mode particulier de réalisation de l'invention,
[Fig. 2] est une vue en section longitudinale du moteur électrique de la figure 1.
[Fig. 3] est une vue en section transversale du moteur électrique de la figure 1.
[Fig. 4] est une vue en perspective du moteur électrique de la figure 1.
[Fig. 5] est une vue schématique d'un sytème de motorisation comprenant le moteur électrique de la figue 1 et un moteur thermique.

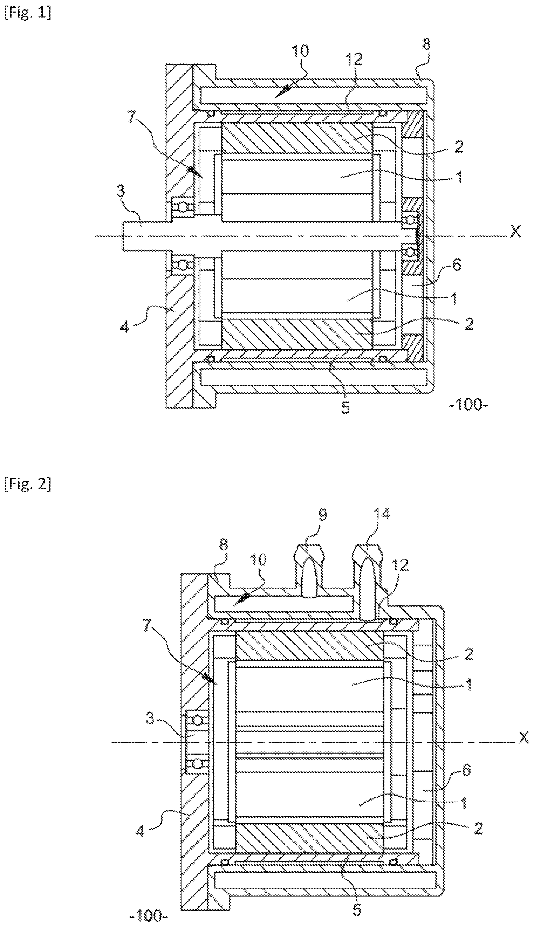

Comme illustré aux figures 1 à 3, le moteur électrique 100 de l'invention comprend un rotor 1 dont l'arbre de rotation 3 s'étend selon un axe d'extension X et un stator 2 disposé autour du rotor 1. Il comprend également un palier avant 4 comprenant une portion cylindrique 5 s'étendant selon l'axe d'extension X et un palier arrière 6, possédant une forme globale de disque, assemblés ensemble en formant une cavité interne 7 permettant de loger le rotor 1 et le stator 2. Selon une disposition non visible sur les figures, le palier avant 4 est en aluminium et le palier arrière 6 est en acier.

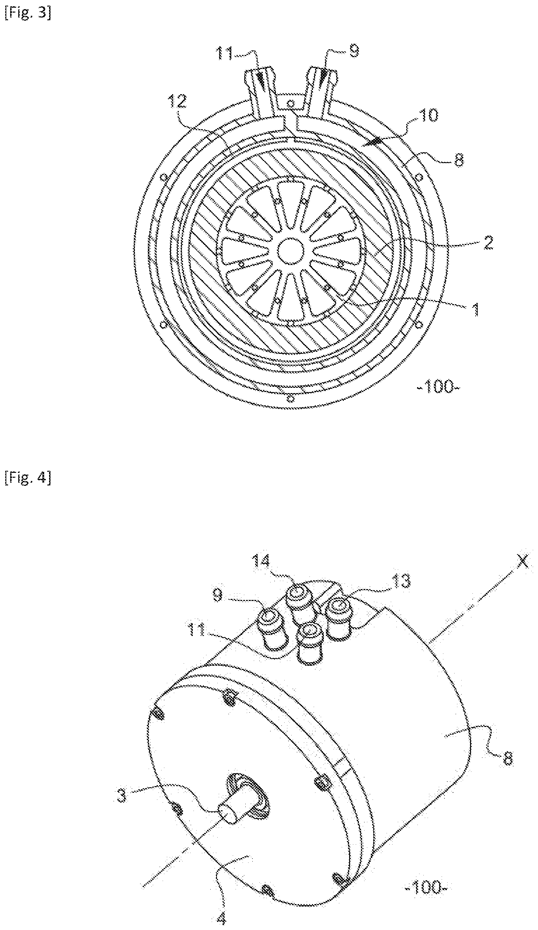

Le moteur électrique 100 comprend en outre un couvercle 8 en forme de cloche en matière plastique. Le couvercle 8 recouvre la totalité du palier arrière 6 et au moins la portion cylindrique 5 du palier avant 4 (illustré aux figures 1 à 4). Le couvercle 8 comprend une chambre interne 10 qui s'étend autour de la cavité interne 7. Le couvercle 8 est doté d'une entrée de fluide caloporteur 9 et d'une sortie de fluide caloporteur 11 reliées fluidiquement à la chambre interne 10 de sorte à permettre une circulation d'un fluide caloporteur dans la chambre interne 10 (illustré aux figures 2 et 3).

Selon une disposition représentée sur les figures 1 à 3, le couvercle 8 est configuré pour former avec la portion cylindrique 5 du palier avant 4 un canal interne 12 s'étendant au moins en partie autour de la cavité interne 7. Le couvercle 8 comprend également une tubulure d'entrée 13 de liquide réfrigérant et une tubulure de sortie 14 de liquide réfrigérant reliées fluidiquement au canal interne 12. Ainsi, le couvercle 8 est configuré pour la circulation d'un liquide réfrigérant dans le canal interne 12, permettant le refroidissement de la cavité interne 7 et du stator 2.

Comme visible aux figures 1 et 2, le canal interne 12 possède une forme sensiblement cylindrique dont l'axe longitudinal s'étend coaxialement à l'axe d'extension X ainsi que la chambre interne 10 qui est cylindrique. La chambre interne 10 et le canal interne 12 sont coaxiaux, la chambre interne 10 entourant le canal interne 12 de sorte à faciliter l'échange thermique.

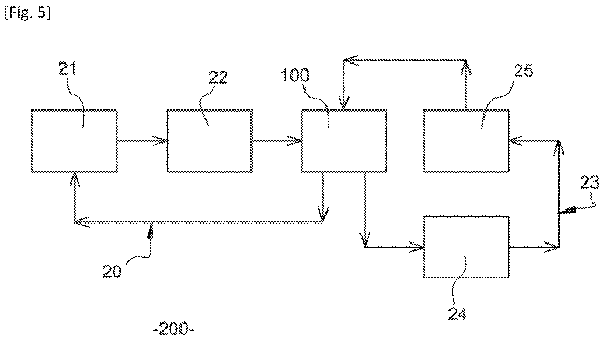

La figure 5 illustre un autre aspect de l'invention portant sur un système de motorisation 200 comprenant un circuit de circulation 20 pour fluide caloporteur. Le circuit de circulation 20 comporte successivement un moteur thermique 21, une première pompe 22 et un moteur électrique 100 tel que précédemment décrit. Tous ces éléments sont reliés fluidiquement en série. La première pompe 22 permet d'entrainer la circulation du fluide caloporteur dans le circuit de circulation 20, depuis la chambre interne 10 du moteur électrique 100 vers le moteur thermique 21 de manière à effectuer un échange thermique. Le fluide caloporteur refroidit le moteur électrique 100 quand il est en fonctionnement puis transfère les calories emmagasinées au moteur thermique 21.

En parallèle et selon la disposition illustrée sur la figure 5, le système de motorisation 200 comprend également un circuit réfrigérant 23 dans lequel est destiné à circuler un liquide réfrigérant du moteur électrique 100. Le circuit réfrigérant 23 comporte successivement le moteur électrique 100, une deuxième pompe 24 et un échangeur thermique 25 reliés fluidiquement en série. Le liquide réfrigérant circulant dans le canal interne 12 du moteur électrique 100 peut être refroidi dans l'échangeur thermique 25 grâce à l'action de la deuxième pompe 24 utilisée pour entrainer la circulation du liquide réfrigérant. Lorsque l'invention est appliquée aux véhicules légers ou poids lourds, l'échangeur thermique 25 est un radiateur communément utilisé dans le domaine. Le liquide réfrigérant est refroidit via l'air rencontré lors de la circulation du véhicule. Comme représenté à la figure 5, le circuit réfrigérant 23 et le circuit de circulation 20 pour fluide caloporteur sont configurés de sorte que le sens de circulation du liquide réfrigérant est opposé au sens de circulation du fluide caloporteur. La figure 4 illustre l'entrée de fluide caloporteur 9 disposée face à la tubulure de sortie 14 du fluide réfrigérant. Réciproquement la sortie de fluide caloporteur 11 est disposée face à la tubulure d'entrée 13 du fluide réfrigérant. Cette configuration permet d'optimiser le fonctionnement du système de motorisation 200, car il permet d'optimiser l'échange thermique dans la chambre interne 10 entre le fluide caloporteur qui entre dans le moteur électrique 100 à proximité de la tubulure de sortie 14 du liquide réfrigérant, c'est-à-dire à l'endroit ou le liquide réfrigérant est le plus chaud. Celui-ci a en effet gagné des calories en traversant le canal interne 12 ce qui rend très efficace l'échange thermique avec le fluide caloporteur.

Selon une disposition non visible sur les figures, le système de motorisation 200 comprend une sonde de température configurée pour mesurer la température du fluide caloporteur à l'entrée du moteur thermique 21. De plus, un contrôleur prévu dans la première pompe 22 permet de communiquer avec la sonde de température pour piloter le fonctionnement ou l'arrêt de la première pompe 22.

Le contrôleur peut notamment commander le démarrage de la première pompe 22 pour entrainer la circulation du fluide caloporteur dans le circuit 20 et dans la chambre interne 10 lorsque la température du fluide caloporteur mesurée à l'entrée du moteur thermique 21 est inférieure à une valeur de température seuil prédéterminée, choisie de sorte à optimiser le fonctionnement du moteur thermique 21.

Réciproquement, le contrôleur peut commander l'arrêt de la première pompe 22 de sorte à arrêter la circulation du fluide caloporteur dans la chambre interne 10 lorsque la température du fluide caloporteur mesurée est supérieure à une valeur de température seuil prédéterminée, et qui risquerait d'inverser l'échange thermique avec le moteur électrique 100. Le fluide caloporteur pourrait en effet réchauffer le moteur 100 au lieu de participer à son refroidissement si sa température devenait trop élevée. Selon un exemple d'application de l'invention dans lequel le système de motorisation 200 est utilisé pour la motorisation d'un véhicule automobile, le contrôleur est avantageusement utilisé pour déclencher la première pompe 22, grâce aux résultats des mesures de température effectuées par la sonde de température. En effet, au démarrage du véhicule, le moteur thermique 21 est froid. Or il est connu que la mise en route du moteur thermique 21 à froid génère beaucoup plus de particules polluantes dont le CO₂. Par ailleurs son fonctionnement n'est pas non plus optimal à basse température. Ainsi, le contrôleur est paramétré de sorte à commander le démarrage de la première pompe 22 lorsque la température du fluide caloporteur mesurée par la sonde à l'entrée du moteur thermique 21 se situe sous la température seuil prédéterminée, par exemple 90°C. La première pompe 22 permet la circulation du fluide caloporteur (ici huile de lubrification moteur) dans la chambre interne 10 du moteur électrique 100 qui se réchauffe avec l'augmentation de la température interne des parties actives (rotor et stator). Lorsque le contrôleur reçoit la mesure de température et que la comparaison avec la température seuil prédéterminée indique que la température du fluide caloporteur est égale ou supérieure à environ 90°C, le contrôleur donne l'instruction d'arrêter la première pompe 22. Le moteur thermique 21 se trouve alors dans de meilleures conditions pour son démarrage et entre alors dans son fonctionnement standard, communément utilisé sur les moteurs thermiques actuels présents sur le marché automobile. Le moteur électrique 100 fonctionne toujours (dans les mêmes modes de fonctionnement d'un moteur en traction) et est refroidit par son propre circuit de glycol 23.

Cet exemple d'application pour un moteur thermique 21 est avantageusement prévue pour limiter l'émission de CO₂ d'un moteur froid en réchauffant l'huile de lubrification au préalable de son démarrage. D'autres exemples d'applications peuvent trouver un bénéfice dans une gestion optimale de la température et du fonctionnement des moteurs thermique et électrique ainsi que de la pollution émise.

Ainsi, la présente invention permet d'améliorer le refroidissement d'un moteur électrique 100 en fonctionnement par un échange de chaleur organisé dans une chambre interne 10 facile et peu coûteuse à fabriquer. De plus cet échange de chaleur peut être utilisé pour un transfert thermique vers un dispositif nécessitant d'être réchauffé en créant un circuit fluidique pour un fluide caloporteur entre la sortie de fluide réfrigérant et l'entrée du dispositif à réchauffer. Les figures illustrent une application au réchauffement de l'huile de lubrification d'un moteur thermique 21 mais ce système peut trouver d'autres applications, notamment pour le réchauffement de l'huile de lubrification d'une boite de vitesse ou encore pour la gestion de la température (chauffage/refroidissement) des batteries, capacités thermiques, etc... sans sortir du cadre de l'invention. L'invention n'est évidemment pas limitée à la configuration de l'invention telle que décrite précédemment.

## Revendications

1. Moteur électrique (100) comprenant :
- un rotor (1) dont l'arbre de rotation (3) s'étend selon un axe d'extension (X),
- un stator (2) disposé autour du rotor (1),
- un palier avant (4) et un palier arrière (6) configurés pour être assemblés en formant une cavité interne (7) dans laquelle sont logés le rotor (1) et le stator (2), le palier avant (4) comprenant une portion cylindrique (5) s'étendant selon l'axe d'extension (X), et
- un couvercle (8) en forme de cloche recouvrant totalement le palier arrière (6) et au moins la portion cylindrique (5) du palier avant (4), le couvercle (8) étant configuré pour former avec la portion cylindrique (5) au moins un canal interne (12) s'étendant au moins en partie autour de la cavité interne (7), le canal interne (12) étant configuré pour la circulation d'un liquide réfrigérant, le couvercle (8) comprenant une chambre interne (10) qui s'étend au moins en partie autour de la cavité interne (7) en entourant le canal interne (12), une entrée de fluide caloporteur (9) et une sortie de fluide caloporteur (11) reliées fluidiquement à la chambre interne (10) de sorte à permettre une circulation d'un fluide caloporteur dans la chambre interne (10).

2. Moteur électrique (100) selon la revendication 1, dans lequel le canal interne (12) possède une forme sensiblement cylindrique dont l'axe longitudinal s'étend coaxialement à l'axe d'extension (X).

3. Moteur électrique 100 selon l'une des revendications 1 à 2, dans lequel le fluide caloporteur est une huile de lubrification telle qu'une huile pour moteur thermique (21) ou une huile de boite de vitesse.

4. Moteur électrique (100) selon l'une des revendications précédentes, dans lequel la chambre interne (10) est cylindrique.

5. Moteur électrique (100) selon l'une des revendications 1 à 4, dans lequel la chambre interne (10) et le canal interne (12) sont coaxiaux.

6. Système de motorisation (200) comprenant un circuit de circulation (20) pour fluide caloporteur comportant successivement :
- un moteur thermique (21),
- une première pompe (22), et
- un moteur électrique (100) selon l'une des revendications 1 à 5,
reliés fluidiquement en série, la première pompe (22) étant configurée pour entrainer la circulation du fluide caloporteur dans le circuit de circulation (20) depuis la chambre interne (10) du moteur électrique (100) vers le moteur thermique (21) de manière à effectuer un transfert thermique depuis le moteur électrique (100) vers le moteur thermique (21) afin de transférer des calories du moteur électrique (100) vers le moteur thermique (21) grâce au fluide caloporteur.

7. Système de motorisation (200) selon la revendication 6, comprenant une sonde de température configurée pour mesurer la température du fluide caloporteur à l'entrée du moteur thermique (21), et dans lequel la première pompe (22) comprend un contrôleur configuré pour communiquer avec la sonde de température, et piloter :
- le démarrage de la première pompe (22) de sorte à entrainer la circulation du fluide caloporteur dans la chambre interne (10) lorsque la température du fluide caloporteur mesurée par la sonde de température est inférieure à une valeur de température seuil prédéterminée de sorte à réchauffer le moteur thermique (21), et
- l'arrêt de la première pompe (22) de sorte à arrêter la circulation du fluide caloporteur dans la chambre interne (10) lorsque la température du fluide caloporteur mesurée par la sonde de température est supérieure à une valeur de température seuil prédéterminée.

8. Système de motorisation (200) selon l'une des revendications 6 ou 7, comprenant un circuit réfrigérant (23) pour la circulation d'un liquide réfrigérant comportant successivement :
un moteur électrique (100) selon la revendication 1 à 5,
- une deuxième pompe (24), et
- un échangeur thermique (25) configuré pour refroidir un fluide réfrigérant, reliés fluidiquement en série, la deuxième pompe (24) étant configurée pour entrainer la circulation du liquide réfrigérant dans le circuit réfrigérant (23) depuis l'échangeur thermique (25) vers le canal interne (12) en vue de refroidir le moteur électrique (100).

9. Système de motorisation (200) selon la combinaison des revendications 6 et 8, dans lequel le circuit réfrigérant (23) et le circuit de circulation (20) pour fluide caloporteur sont configurés afin que le sens de circulation du liquide réfrigérant est opposé au sens de circulation du fluide caloporteur.

## Patentansprüche

1. Elektromotor (100), der Folgendes umfasst:
- einen Rotor (1), dessen Drehwelle (3) sich entlang einer Erweiterungsachse (X) erstreckt,
- einen Stator (2), der um den Rotor (1) herum angeordnet ist,
- ein vorderes Lager (4) und ein hinteres Lager (6), die so eingerichtet sind, dass sie zusammengebaut werden und einen inneren Hohlraum (7) bilden, in dem der Rotor (1) und der Stator (2) untergebracht sind, wobei das vordere Lager (4) einen zylindrischen Abschnitt (5) umfasst, der sich entlang der Erweiterungsachse (X) erstreckt, und
- einen glockenförmigen Deckel (8), der das hintere Lager (6) und mindestens den zylindrischen Abschnitt (5) des vorderen Lagers (4) vollständig abdeckt, wobei der Deckel (8) so eingerichtet ist, dass er mit dem zylindrischen Abschnitt (5) mindestens einen Innenkanal (12) bildet, der sich mindestens teilweise um den inneren Hohlraum (7) herum erstreckt, wobei der Innenkanal (12) für die Zirkulation einer Kühlflüssigkeit eingerichtet ist, wobei der Deckel (8) eine Innenkammer (10), die sich mindestens teilweise um den inneren Hohlraum (7) herum erstreckt, indem sie den Innenkanal (12) umschließt, einen Wärmeträgermediumeinlass (9) und einen Wärmeträgermediumauslass (11) umfasst, die fluidisch mit der Innenkammer (10) verbunden sind, so dass eine Zirkulation eines Wärmeträgermediums in der Innenkammer (10) ermöglicht wird.

2. Elektromotor (100) nach Anspruch 1, wobei der Innenkanal (12) eine im Wesentlichen zylindrische Form aufweist, deren Längsachse sich koaxial zur Erweiterungsachse (X) erstreckt.

3. Elektromotor 100 nach einem der Ansprüche 1 bis 2, wobei das Wärmeträgermedium ein Schmieröl wie ein Öl für einen Verbrennungsmotor (21) oder ein Öl für ein Getriebe ist.

4. Elektromotor (100) nach einem der vorhergehenden Ansprüche, wobei die Innenkammer (10) zylindrisch ist.

5. Elektromotor (100) nach einem der Ansprüche 1 bis 4, wobei die Innenkammer (10) und der Innenkanal (12) koaxial sind.

6. Motorisierungssystem (200), das einen Zirkulationskreislauf (20) für ein Wärmeträgermedium umfasst und nacheinander Folgendes enthält:
- einen Verbrennungsmotor (21),
- eine erste Pumpe (22), und
- einen Elektromotor (100) nach einem der Ansprüche 1 bis 5,
die fluidisch in Reihe verbunden sind, wobei die erste Pumpe (22) so eingerichtet ist, dass sie die Zirkulation des Wärmeträgermediums im Zirkulationskreislauf (20) von der Innenkammer (10) des Elektromotors (100) zum Verbrennungsmotor (21) antreibt, um einen Wärmetransfer vom Elektromotor (100) zum Verbrennungsmotor (21) zu veranlassen, um mittels des Wärmeträgermediums Wärmeenergie vom Elektromotor (100) zum Verbrennungsmotor (21) zu übertragen.

7. Motorisierungssystem (200) nach Anspruch 6, das einen Temperatursensor umfasst, der so eingerichtet ist, dass er die Temperatur des Wärmeträgermediums am Eingang des Verbrennungsmotors (21) misst, und wobei die erste Pumpe (22) eine Steuerung umfasst, die so eingerichtet ist, dass sie mit dem Temperatursensor in Verbindung steht und Folgendes steuert:
- das Starten der ersten Pumpe (22), um die Zirkulation des Wärmeträgermediums in der Innenkammer (10) anzutreiben, wenn die vom Temperatursensor gemessene Temperatur des Wärmeträgermediums geringer ist als ein vorbestimmter Schwellenwert, um den Verbrennungsmotor (21) aufzuwärmen, und
- das Anhalten der ersten Pumpe (22), um die Zirkulation des Wärmeträgermediums in der Innenkammer (10) anzuhalten, wenn die vom Temperatursensor gemessene Temperatur des Wärmeträgermediums größer ist als ein vorbestimmter Schwellenwert.

8. Motorisierungssystem (200) nach einem der Ansprüche 6 oder 7, das einen Kühlkreislauf (23) für die Zirkulation einer Kühlflüssigkeit umfasst und nacheinander Folgendes enthält:
einen Elektromotor (100) nach Anspruch 1 bis 5,
- eine zweite Pumpe (24), und
- einen Wärmetauscher (25), der so eingerichtet ist, dass er ein Kältemittel kühlt, welche fluidisch in Reihe verbunden sind, wobei die zweite Pumpe (24) so eingerichtet ist, dass sie die Zirkulation der Kühlflüssigkeit im Kühlmittelkreislauf (23) vom Wärmetauscher (25) zum Innenkanal (12) zum Kühlen des Elektromotors (100) antreibt.

9. Motorisierungssystem (200) nach der Kombination der Ansprüche 6 und 8, wobei der Kühlkreislauf (23) und der Zirkulationskreislauf (20) für ein Wärmeträgermedium so eingerichtet sind, dass die Durchflussrichtung der Kühlflüssigkeit der Durchflussrichtung des Wärmeträgermediums entgegengesetzt ist.

## Claims

1. An electric motor (100) comprising:
- a rotor (1) whose rotation shaft (3) extends along an extension axis (X),
- a stator (2) arranged about the rotor (1),
- a front bearing (4) and a rear bearing (6) configured to be assembled by forming an internal cavity (7) in which the rotor (1) and the stator (2) are housed, the front bearing (4) comprising a cylindrical portion (5) extending along the extension axis (X), and
- a bell-shaped cover (8) completely covering the rear bearing (6) and at least the cylindrical portion (5) of the front bearing (4), the cover (8) being configured to form with the cylindrical portion (5) at least one internal channel (12) extending at least partly about the internal cavity (7), the internal channel (12) being configured for the circulation of a coolant, the cover (8) comprising an internal chamber (10) which extends at least partly about the internal cavity (7) by surrounding the internal channel (12), a heat transfer fluid inlet (9) and a heat transfer fluid outlet (11) fluidically connected to the internal chamber (10) so as to allow a circulation of a heat transfer fluid in the internal chamber (10).

2. The electric motor (100) according to claim 1, wherein the internal channel (12) has a substantially cylindrical shape whose longitudinal axis extends coaxially with the extension axis (X).

3. The electric motor 100 according to any of claims 1 to 2, wherein the heat transfer fluid is a lubricating oil such as a heat engine oil (21) or a gearbox oil.

4. The electric motor (100) according to any of the preceding claims, wherein the internal chamber (10) is cylindrical.

5. The electric motor (100) according to any of claims 1 to 4, wherein the internal chamber (10) and the internal channel (12) are coaxial.

6. A motorization system (200) comprising a circulation circuit (20) for heat transfer fluid including successively:
- a heat engine (21),
- a first pump (22), and
- an electric motor (100) according to any of claims 1 to 5, fluidically connected in series, the first pump (22) being configured to drive the circulation of the heat transfer fluid in the circulation circuit (20) from the internal chamber (10) of the electric motor (100) to the heat engine (21) so as to carry out a heat transfer from the electric motor (100) to the heat engine (21) in order to transfer calories from the electric motor (100) to the heat engine (21) using the heat transfer fluid.

7. The motorization system (200) according to claim 6, comprising a temperature probe configured to measure the temperature of the heat transfer fluid at the inlet of the heat engine (21), and in which the first pump (22) comprises a controller configured to communicate with the temperature probe, and to control:
- the starting of the first pump (22) so as to cause the circulation of the heat transfer fluid in the internal chamber (10) when the temperature of the heat transfer fluid measured by the temperature probe is lower than a predetermined threshold temperature value so as to heat the heat engine (21), and
- the stopping of the first pump (22) so as to stop the circulation of the heat transfer fluid in the internal chamber (10) when the temperature of the heat transfer fluid measured by the temperature probe is higher than a predetermined threshold temperature value.

8. The motorization system (200) according to any of claims 6 or 7, comprising a cooling circuit (23) for the circulation of a coolant including successively:
an electric motor (100) according to claim 1 to 5,
- a second pump (24), and
- a heat exchanger (25) configured to cool a cooling fluid, fluidically connected in series, the second pump (24) being configured to drive the circulation of the coolant in the cooling circuit (23) from the heat exchanger (25) to the internal channel (12) in order to cool the electric motor (100).

9. The motorization system (200) according to the combination of claims 6 and 8, wherein the cooling circuit (23) and the circulation circuit (20) for heat transfer fluid are configured so that the direction of circulation of the coolant is opposite to the direction of circulation of the heat transfer fluid.
